# FASCICULE DE BREVET EUROPEEN

(11) **EP 3 899 432 B1**
(45) Date de publication et mention de la délivrance du brevet: **25.01.2023**
(21) Numéro de dépôt: 19829550.3
(22) Date de dépôt: 19.12.2019
(51) Int. Cl.: G01C 21/16, G01C 25/00

(54) **PROCEDE DE CARACTERISATION D'UNE UNITE DE MESURE INERTIELLE**
VERFAHREN ZUR CHARAKTERISIERUNG EINES TRÄGHEITSNAVIGATIONSSYSTEMS
METHOD FOR CHARACTERISING AN INERTIAL MEASUREMENT UNIT

(30) Priorité: 21.12.2018 FR 1873747
(43) Date de publication de la demande: 27.10.2021
(73) Titulaire: Safran Electronics & Defense, 75015 Paris (FR)
(72) Inventeur: ELIE, Philippe, 77550 MOISSY-CRAMAYEL (FR); DAVI, Frédéric, 77550 MOISSY-CRAMAYEL (FR); LIGNON, Christian, 77550 MOISSY-CRAMAYEL (FR)
(74) Mandataire: Lavialle, Bruno François Stéphane
(86) Numéro de dépôt international: PCT/EP2019/086286
(87) Numéro de publication internationale: WO 2020/127716

(56) Documents cités:
- CN-A- 108 225 374
- ELDESOKY ABDALLA ET AL: "Performance enhancement of low-cost MEMS inertial sensors using extensive calibration technique", 2017 34TH NATIONAL RADIO SCIENCE CONFERENCE (NRSC), IEEE, 13 mars 2017 (2017-03-13), pages 415-424, XP033084353, DOI: 10.1109/NRSC.2017.7893511
- BISTROV V: "Study of the characteristics of random errors in measurements by MEMS inertial sensors", AUTOMATIC CONTROL AND COMPUTER SCIENCES, ALLERTON PRESS, INC, HEIDELBERG, vol. 45, no. 5, 9 novembre 2011 (2011-11-09), pages 284-292, XP019974431, ISSN: 1558-108X, DOI: 10.3103/S0146411611050051
- WEN KAI ET AL: "Inertial navigation system positioning error analysis and Cramér-Rao lower bound", 2016 IEEE/ION POSITION, LOCATION AND NAVIGATION SYMPOSIUM (PLANS), IEEE, 11 avril 2016 (2016-04-11), pages 213-218, XP032905795, DOI: 10.1109/PLANS.2016.7479704
- SONGLAI HAN ET AL: "Quantization and Colored Noises Error Modeling for Inertial Sensors for GPS/INS Integration", IEEE SENSORS JOURNAL, IEEE SERVICE CENTER, NEW YORK, NY, US, vol. 11, no. 6, 1 juin 2011 (2011-06-01), pages 1493-1503, XP011354651, ISSN: 1530-437X, DOI: 10.1109/JSEN.2010.2093878
- NASER EL-SHEIMY ET AL: "Analysis and Modeling of Inertial Sensors Using Allan Variance", IEEE TRANSACTIONS ON INSTRUMENTATION AND MEASUREMENT., vol. 57, no. 1, 1 janvier 2008 (2008-01-01), pages 140-149, XP055615956, US ISSN: 0018-9456, DOI: 10.1109/TIM.2007.908635

## Description

La présente invention concerne le domaine de la mesure inertielle, notamment à des fins de navigation.

### ARRIERE-PLAN TECHNOLOGIQUE

Les mesures inertielles aux fins de navigation sont habituellement fournies par des unités de mesure inertielle (couramment appelées UMI ou cœurs inertiels) comprenant un bloc portant trois accéléromètres ayant des axes sensibles positionnés chacun selon un axe d'un repère de mesure et trois capteurs angulaires disposés pour déterminer une orientation du repère de mesure par rapport à un repère inertiel. Les accéléromètres mesurent les composantes d'un vecteur de la force spécifique. Les capteurs angulaires peuvent être des gyroscopes ou des gyromètres. Les gyroscopes déterminent l'orientation du vecteur de force spécifique dans le repère inertiel. L'emploi de gyromètres en lieu et place de gyroscopes permet également, après intégration, de déterminer l'orientation du vecteur de force spécifique. Cette intégration consiste à intégrer, par une méthode classique de type WILCOS, le vecteur instantané de rotation du quaternion établi par les sorties des gyromètres qui représentent des incréments d'angle. Le calcul de la différence entre le vecteur de force spécifique et le champ de gravité fournit l'accélération qui sera par la suite intégrée pour fournir les données de navigation.

Pour caractériser une unité de mesure inertielle, c'est-à-dire déterminer la capacité de l'unité de mesure inertielle à fournir des mesures compatibles avec la précision requise pour l'application envisagée, il est connu de placer chacun des capteurs inertiels sur une table/plateforme centrée sur un point fixe et de déterminer pour chacun d'eux la courbe de variance d'Allan. Ces courbes sont ensuite exploitées par une modélisation des erreurs de navigation inertielle, utilisant par exemple une covariance effective. Ceci ne permet pas d'obtenir une caractérisation globale, simple et rapide de l'unité de mesure inertielle. Pour caractériser globalement une unité de mesure inertielle, il est actuellement nécessaire de l'intégrer dans une centrale de navigation et d'exécuter un algorithme de navigation inertielle prévoyant une calibration, un alignement et une navigation. Cependant, cette méthode n'est ni simple ni rapide.

Il est connu du document CN108225374A un procédé de caractérisation d'un système inertiel à travers une analyse de la variance d'Allan sur des mesures effectuées par ledit système inertiel; en utilisant un algorithme génétique et un modèle reliant les erreurs dudit système et la variance d'Allan, les paramètres du modèle sont déterminés.

### OBJET DE L'INVENTION

Un but de l'invention est de fournir un moyen pour caractériser une unité de mesure inertielle.

### BREF EXPOSE DE L'INVENTION

A cet effet, on prévoit, selon l'invention un procédé de caractérisation d'une unité de mesure inertielle comprenant un bloc portant au moins un accéléromètre ayant un axe sensible positionné selon un axe d'un repère de mesure et au moins un capteur angulaire inertiel disposé pour déterminer une orientation du repère de mesure par rapport à un repère inertiel. Le procédé comprend les étapes de :
- maintenir l'unité de mesure inertielle centrée sur un point fixe par rapport au sol dans un environnement prédéterminé pour obtenir des signaux accélérométriques images d'au moins une composante du vecteur de force spécifique dans le repère de mesure et des signaux angulaires images d'au moins une composante de la rotation instantanée du repère de mesure par rapport à un repère inertiel ;
- traiter les signaux pour obtenir des données représentatives d'une projection du vecteur de force spécifique dans le repère inertiel après compensation de la projection de la rotation terrestre sur l'axe de mesure du capteur angulaire inertiel ;
- calculer la variance d'Allan sur ces données et la comparer à des données de référence.

L'unité de mesure inertielle étant maintenue centrée sur un point fixe par rapport au sol, la force spécifique mesurée est théoriquement égale à la gravité. Si tel n'est pas le cas dans les mesures fournies par l'unité de mesure inertielle, la différence est due à des erreurs et principalement à des erreurs des gyromètres dont on sait qu'ils contribuent à la plus grande part de l'erreur totale. Le procédé selon l'invention exploite les mesures directement fournies par l'unité de mesure inertielle et calcule une variance d'Allan sur des données obtenues par un traitement relativement simple de ces mesures, à savoir une projection du vecteur de force spécifique dans un repère inertiel et la compensation de la projection de la rotation terrestre sur les axes sensibles des gyromètres ou gyroscopes. La variance d'Allan obtenue par la mise en œuvre du procédé de l'invention fournit une valeur asymptotique de performance de la mesure de la force spécifique. Cette valeur de performance est représentative de la capacité de l'unité de mesure inertielle à fournir des mesures compatibles avec la précision requise pour l'application envisagée. Le procédé de l'invention rend donc inutile de traiter les mesures de l'unité de mesure inertielle dans un algorithme de navigation.

Selon un mode de mise en oeuvre préféré, le bloc porte trois accéléromètres ayant des axes sensibles positionnés chacun selon un axe d'un repère de mesure et trois gyromètres disposés pour déterminer une orientation du repère de mesure par rapport à un repère inertiel.

De préférence encore, l'un des axes du repère de mesure est disposé selon la verticale.

Ceci permet de découpler les mesures fournies par le gyromètre correspondant à cet axe par rapport aux mesures fournies par les autres gyromètres : l'erreur contenue dans les mesures dudit gyromètre n'est due qu'à ce gyromètre. Avantageusement, l'environnement prédéterminé comprend une composante thermique prédéterminée et/ou une composante vibratoire prédéterminée et/ou une composante magnétique prédéterminée.

Il est donc possible de caractériser l'unité de mesure inertielle dans les conditions de son utilisation.

Selon un mode de réalisation préféré la compensation de la rotation terrestre est réalisée en utilisant un modèle d'ordre au moins égal à 2 et avantageusement d'ordre 3. D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique d'une unité de mesure inertielle à laquelle est appliquée le procédé selon l'invention ;
[Fig. 2] la figure 2 est une représentation des courbes de variance d'Allan obtenue lors de la mise en oeuvre du procédé.

### DESCRIPTION DETAILLEE DE L'INVENTION

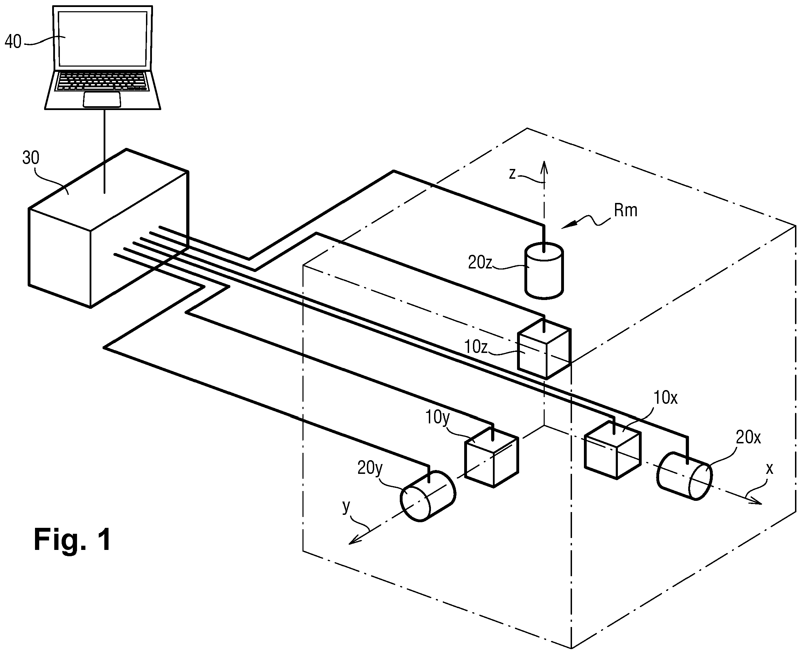

En référence à la figure 1, l'unité de mesure inertielle, généralement désignée en 1, comprend trois accéléromètres 10x, 10y, 10z, et trois gyromètres 20x, 20y, 20z, qui sont disposés selon les axes x, y, z d'un repère Rm de mesure. Les accéléromètres et gyromètres sont reliés à un circuit électronique de traitement 30 qui a six entrées et six sorties à savoir une pour chacun des capteurs 10x, 10y, 10z, 20x, 20y, 20z. L'unité de mesure inertielle 1 est connue en elle-même. Lorsque l'unité de mesure inertielle 1 est en utilisation, lesdites sorties sont raccordées à un circuit électronique de traitement appartenant à une centrale inertielle.

L'invention concerne un procédé de caractérisation d'une telle unité de mesure inertielle 1. Le procédé est mis en œuvre au moyen d'un ordinateur 40 relié aux sorties du circuit électronique de traitement 30.

L'ordinateur 40 est agencé pour exécuter un programme comprenant des instructions pour mettre en œuvre le procédé de l'invention.

L'unité de mesure inertielle 1 est placée sur un marbre fixe par rapport au sol. L'un des axes du repère de mesure Rm est de préférence disposé selon la verticale car cela permet de découpler les mesures du gyromètre correspondant par rapport aux mesures des deux autres gyromètres et facilite le traitement des mesures et la détermination des erreurs des gyromètres.

En variante, l'unité de mesure inertielle 1 peut être placée :
- sur une plateforme vibrante pour recréer un environnement ayant une composante vibratoire prédéterminée,
- sur une plateforme de type 1 axe voire 3 axes permettant de recréer un environnement ayant une ou plusieurs composantes de rotation prédéterminées,
- dans une étuve pour recréer un environnement ayant une composante thermique prédéterminée,
- au voisinage d'un dispositif électromagnétique pour recréer un environnement ayant une composante magnétique prédéterminée.

On pourra aussi soumettre l'unité de mesure inertielle 1 à un champ électrique, à des rayonnements de particules, à de l'humidité... pour se rapprocher au plus près des conditions d'utilisation réelles de l'unité de mesure inertielle 1.

Dans tous les cas, pour la mise en oeuvre du procédé de l'invention, il est nécessaire de maintenir l'unité de mesure inertielle 1 centrée sur un point fixe par rapport au sol dans l'environnement prédéterminé. Dans le cas contraire, il serait nécessaire d'utiliser un algorithme de navigation pour déterminer les mouvements de l'unité de mesure inertielle pour déduire les composantes relatives auxdits mouvements des signaux fournis par l'unité de mesure inertielle 1, ce qui complique le procédé de l'invention.

L'unité de mesure inertielle 1 fixée sur le marbre fournit, à l'ordinateur 40, des signaux accélérométriques ΔV images des composantes du vecteur de force spécifique dans le repère de mesure Rm et des signaux gyrométriques Δθ images des composantes de la rotation instantanée du repère de mesure Rm par rapport à un repère inertiel I.

Le programme exécuté par l'ordinateur 40 traite les signaux pour obtenir des données représentatives d'une projection du vecteur de force spécifique dans le repère inertiel I après compensation de la rotation terrestre. Cette projection est effectuée de manière connue en elle-même.

La compensation de la rotation terrestre est réalisée en utilisant un modèle d'ordre 3 qui est connu en lui-même.

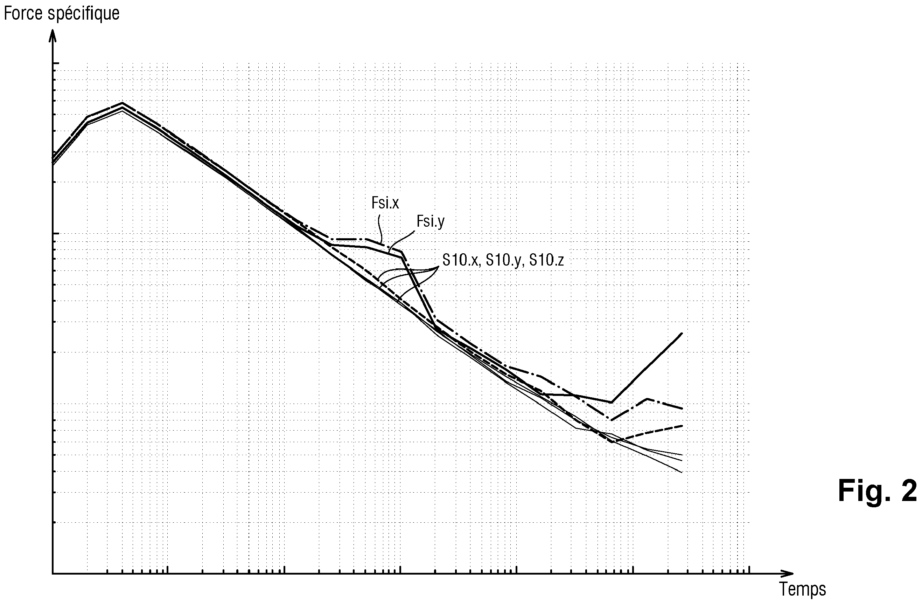

Le programme exécuté par l'ordinateur 40 calcule ensuite la variance d'Allan sur ces données. Les variances d'Allan sont représentées sous forme de courbes sur la figure 2 qui représente en abscisse le temps à une échelle logarithmique et en ordonnée les données représentatives mentionnées ci-dessus échantillonnées à une fréquence ici de 1 kHz. On constate sur la figure 2 que les courbes représentant les variances d'Allan de la projection de la force spécifique dans le repère inertiel selon l'axe x et y Fsi.x et Fsi.y présentent une bosse alors que les courbes représentant les variances d'Allan des accéléromètres S10.x, S10.y ou S10.z sont dépourvues de cette bosse.

Les valeurs de variance d'Allan des Forces Spécifiques inertielles d'une unité de mesure inertielle peuvent ensuite être comparées aux variances d'Allan d'autres unités de mesure inertielle, lesdites mesures étant obtenues avec le procédé de l'invention.

On peut aussi considérer que la valeur de la variance d'Allan au bout d'un temps prédéterminé, par exemple une seconde, constitue une valeur caractérisant l'unité de mesure inertielle et de comparer ladite valeur avec la même valeur d'autres unités de mesure inertielles.

Les valeurs de variance d'Allan d'une unité de mesure inertielle peuvent ensuite être comparées à des seuils d'acceptabilité des unités de mesure inertielle pour une application donnée.

Bien entendu, l'invention n'est pas limitée au mode de réalisation décrit mais englobe toute variante entrant dans le champ de l'invention telle que définie par les revendications.

En particulier, l'unité de mesure inertielle peut comprendre moins d'accéléromètres et moins de gyromètres. L'invention est ainsi applicable à une unité de mesure inertielle qui ne comprendrait qu'un accéléromètre et capteur angulaire inertiel ayant un même axe sensible (par exemple dans une application à un ascenseur). Seule la projection de la force spécifique sur l'axe sensible sera considérée. De la même manière, seule sera compensée la projection de la rotation terrestre sur l'axe sensible unique. L'invention est de la même manière applicable à une unité de mesure inertielle qu comprendrait deux accéléromètres et deux capteurs angulaires inertiels.

Les capteurs angulaires inertiels utilisés peuvent être des gyroscopes ou des gyromètres.

La compensation de la rotation terrestre peut être réalisée en utilisant un modèle d'ordre au moins égal à 2.

La fréquence d'échantillonnage peut être différente d'1 kHz.

L'unité de mesure inertielle peut être déplacée.

L'invention est utilisable dans de multiples applications et notamment dans le domaine du transport. L'invention est par exemple applicable à tout type de véhicule et notamment des aéronefs, des véhicules terrestres, des navires, ou autres comme des ascenseurs.

## Revendications

1. Procédé de caractérisation d'une unité de mesure inertielle (1) comprenant un bloc portant au moins un accéléromètre (10x, 10y, 10z) ayant un axe sensible positionné selon un axe d'un repère de mesure (Rm) : et au moins un capteur angulaire inertiel disposé pour déterminer une orientation du repère de mesure par rapport à un repère inertiel, le procédé comprenant les étapes de :
- maintenir l'unité de mesure inertielle centrée sur un point fixe par rapport au sol dans un environnement prédéterminé pour obtenir des signaux accélérométriques images d'au moins une composante du vecteur de force spécifique dans le repère de mesure et des signaux angulaires images d'au moins une composante de la rotation instantanée du repère de mesure par rapport à un repère inertiel ;
- traiter les signaux pour obtenir des données représentatives d'une projection du vecteur de force spécifique dans le repère inertiel après compensation de la projection de la rotation terrestre sur l'axe de mesure du capteur angulaire inertiel ;
- calculer la variance d'Allan sur ces données et la comparer à des données de référence.

2. Procédé selon la revendication 1, dans lequel le bloc porte trois accéléromètres ayant des axes sensibles positionnés chacun selon un axe du repère de mesure et trois gyromètres (20x, 20y, 20z) disposés pour déterminer une orientation du repère de mesure par rapport au repère inertiel.

3. Procédé selon la revendication précédente, dans lequel l'un des axes du repère de mesure est disposé selon la verticale.

4. Procédé selon l'une quelconque des revendications précédentes, dans lequel l'environnement prédéterminé comprend une composante thermique prédéterminée.

5. Procédé selon l'une quelconque des revendications précédentes, dans lequel l'environnement prédéterminé comprend une composante vibratoire prédéterminée et/ou de rotation prédéterminée.

6. Procédé selon l'une quelconque des revendications précédentes, dans lequel l'environnement prédéterminé comprend une composante magnétique prédéterminée.

7. Procédé selon l'une quelconque des revendications précédentes, dans lequel la compensation de la rotation terrestre est réalisée en utilisant un modèle d'ordre au moins égal à 2.

8. Procédé selon la revendication précédente, dans lequel la compensation de la rotation terrestre est réalisée en utilisant un modèle d'ordre 3.

## Patentansprüche

1. Verfahren zur Charakterisierung einer inertialen Messeinheit (1), die einen Block umfasst, der mindestens einen Beschleunigungsmesser (10x, 10y, 10z) trägt, der eine Messachse hat, die gemäß einer Achse eines Messbezugssystems (Rm) positioniert ist, und mindestens einen inertialen Winkelsensor, der angeordnet ist, um eine Ausrichtung des Messbezugssystems in Bezug auf ein inertiales Bezugssystem zu bestimmen, wobei das Verfahren die Schritte umfasst:
- Halten der inertialen Messeinheit zentriert auf einen Punkt, der in Bezug auf den Boden ortsfest und in einer vorbestimmten Umgebung ist, um akzelerometrische Signale, die Bilder mindestens einer Komponente des Vektors der spezifischen Kraft in dem Messbezugssystem sind, und anguläre Signale, die Bilder mindestens einer Komponente der momentanen Rotation des Messbezugssystems in Bezug auf ein inertiales Bezugssystem sind, zu erhalten;
- Verarbeiten der Signale, um Daten zu erhalten, die repräsentativ für eine Projektion des Vektors der spezifischen Kraft in das inertiale Bezugssystem nach Kompensation der Projektion der Erdrotation um die Messachse des inertialen Winkelsensors sind;
- Berechnen der Allan-Varianz auf diesen Daten und Vergleichen derselben mit Referenzdaten.

2. Verfahren nach Anspruch 1, bei dem der Block drei Beschleunigungsmesser trägt, die Messachsen haben, die jeweils gemäß einer Achse des Messbezugssystems positioniert sind, und drei Gyrometer (20x, 20y, 20z), die angeordnet sind, um eine Ausrichtung des Messbezugssystems in Bezug auf das inertiale Bezugssystem zu bestimmen.

3. Verfahren nach dem vorhergehenden Anspruch, bei dem eine der Achsen des Messbezugssystems entlang der Vertikalen angeordnet ist.

4. Verfahren nach einem der vorhergehenden Ansprüche, bei dem die vorbestimmte Umgebung eine vorbestimmte Wärmekomponente umfasst.

5. Verfahren nach einem der vorhergehenden Ansprüche, bei dem die vorbestimmte Umgebung eine vorbestimmte Schwingungskomponente und/oder vorbestimmte Rotationskomponente umfasst.

6. Verfahren nach einem der vorhergehenden Ansprüche, bei dem die vorbestimmte Umgebung eine vorbestimmte Magnetkomponente umfasst.

7. Verfahren nach einem der vorhergehenden Ansprüche, bei dem die Kompensation der Erdrotation unter Verwendung eines Modells mindestens 2. Ordnung erfolgt.

8. Verfahren nach dem vorhergehenden Anspruch, bei dem die Kompensation der Erdrotation unter Verwendung eines Modells 3. Ordnung erfolgt.

## Claims

1. A method of characterizing an inertial measurement unit (1) comprising a block carrying at least one accelerometer (10x, 10y, 10z) having a sensing axis positioned on an axis of a measurement reference frame (Rm) and having at least one inertial angular sensor arranged to determine the orientation of the measurement reference frame relative to an inertial reference frame, the method comprising the steps of:
. keeping the inertial measurement unit centered on a point that is stationary relative to the ground and that is in a predetermined environment, in order to obtain accelerometer signals that are images of at least one component of the specific force vector in the measurement reference frame and also angular signals that are images of at least one component of the instantaneous rotation of the measurement reference frame relative to an inertial reference frame;
. processing the signals in order to obtain data representative of projecting the specific force vector into the inertial reference frame after compensating the projection for the rotation of the Earth about the measurement axis of the inertial angular sensor; and
. calculating Allan variance on the data and comparing it with reference data.

2. A method according to claim 1, wherein the block carries three accelerometers having respective sensing axes, each positioned on a respective axis of the measurement reference frame, and also three gyros (20x, 20y, 20z) arranged to determine the orientation of the measurement reference frame relative to the inertial reference frame.

3. A method according to the preceding claim, wherein one of the axes of the measurement reference frame is arranged vertically.

4. A method according to any preceding claim, wherein the predetermined environment includes a predetermined thermal component.

5. A method according to any preceding claim, wherein the predetermined environment includes a predetermined vibratory component and/or a predetermined rotary component.

6. A method according to any preceding claim, wherein the predetermined environment includes a predetermined magnetic component.

7. A method according to any preceding claim, wherein compensation for the rotation of the Earth is performed using a model of order not less than 2.

8. A method according to the preceding claim, wherein compensation for the rotation of the Earth is performed using a third order model.
